# EUROPEAN PATENT SPECIFICATION

(11) **EP 3 571 000 B1**
(45) Date of publication and mention of the grant of the patent: **28.04.2021**
(21) Application number: 18707440.6
(22) Date of filing: 17.01.2018
(51) Int. Cl.: B23B 3/24

(54) **COMPOSABLE MACHINE TOOL COMPRISING A KIT FOR CYLINDRICAL AND CONICAL TURNING MACHINING OPERATIONS**
ZUSAMMENSETZBARE WERKZEUGMASCHINE MIT EINEM KIT FÜR ZYLINDRISCHE UND KONISCHE DREHBEARBEITUNGSOPERATIONEN
MACHINE-OUTIL COMPOSABLE COMPRENANT UN KIT DESTINÉ À DES OPÉRATIONS D'USINAGE ROTATIF CYLINDRIQUE ET CONIQUE

(30) Priority: 17.01.2017 IT 201700004720
(43) Date of publication of application: 27.11.2019
(73) Proprietor: Meckinv S.r.l., 88050 Sellia Marina (IT)
(72) Inventor: RUSSO, Evangelista, 88050 Sellia Marina (IT)
(74) Representative: Perrotta, Aldo
(86) International application number: PCT/IT2018/050005
(87) International publication number: WO 2018/134857

(56) References cited:
- GB-A- 1 331 230
- GB-A- 190 601 870
- JP-U- S60 146 601
- US-A- 3 141 364
- US-A- 5 660 093
- US-B1- 6 786 118

## Description

### Technical field of the invention

The present invention relates to a composable machine tool comprising a kit for cylindrical and conical turning machining operations according to the preamble of claim 1. Such machine tools are particularly suitable for machining large diameters.

### State of art

In turning operations one of the major problems encountered in overhanging machining on external surfaces or in blind holes is that the arm which supports the tool while removing the chip, being subject to considerable stress, vibrates and the vibrations of the tool have as result a poor processing. The machined surfaces are not perfectly smooth and the machining tolerances are not respected. To avoid these drawbacks, special materials have been used which increase the mechanical strength without solving the problem and considerably increasing the cost of the machine tools as in the example described in DE2648753A1, which is also not a composable machine.

GB01870 A AD 1906 discloses a composable machine tool with the features of the preamble of independent claim 1.

### Summary of the invention

The main object of the present invention is to provide a machine tool which is mounted on the work piece and which reduces vibrations due to the fact that works are cantilevered. A further object of the present invention is to allow an easy and fast assembly avoiding long and costly centering operations of the machine on the work piece.

The main purpose of reducing the vibrations during the machining by chip removal is carried out with a composable machine tool comprising a kit for cylindrical and conical turning operations characterized in that it comprises an element which is fixed on the workpiece, that a flange is rotatably mounted on the element, that the flange is connected, by means of at least three elongated elements of which an element is hollow, to a ring, that the element is fixed to a machine that generates the rotation motion of the flange and of the ring connected to said flange, that the hollow element is equipped with a worm screw and a scroll nut, that the rotation of the worm screw is actuated by a gearmotor fixed on the flange, that a tool head slidable in a guide is mounted on the scroll nut and that the ring is equipped with at least three stabilization elements that during machining of the workpiece is in contact with the surface of the work piece. Another object of the present invention is to make cylindrical and conical turning operations with the same machine and this can be done by having the machine equipped with a system for tilting the guide on which the tool head slides.

A further main object of the present invention is to provide a composable machine which is easy to assemble since the positioning of the machine is carried out with a positioning plate which replicates the holes present in the fixing plate of the machine itself.

In accordance with the invention the above-mentioned objects are fulfilled through the provision of a composable machine tool according to independent claim 1.

Preferred embodiments of the machine tool of the invention are described in dependent claims 2 to 10.

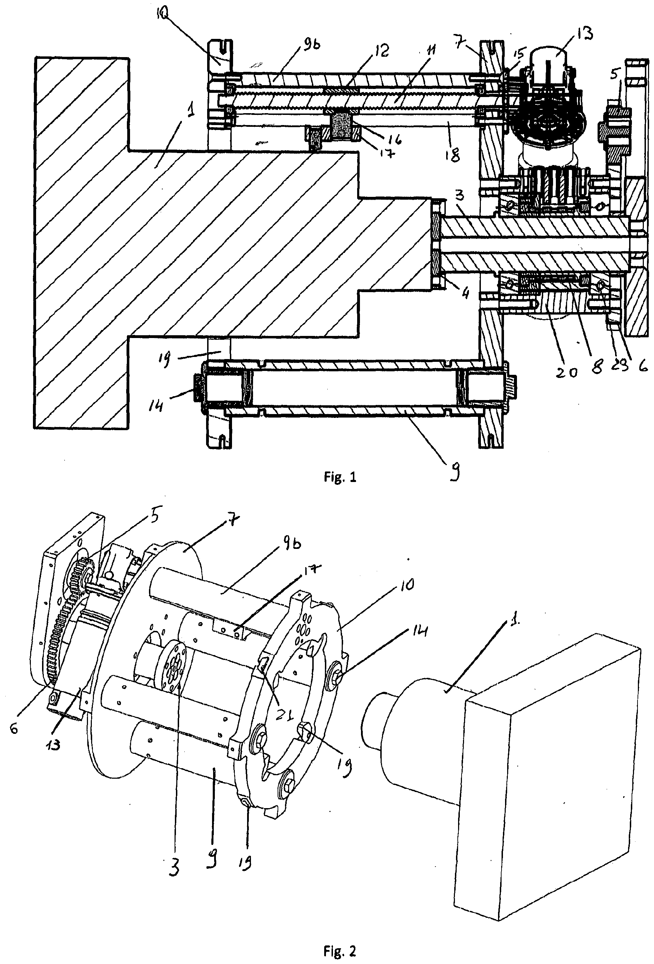

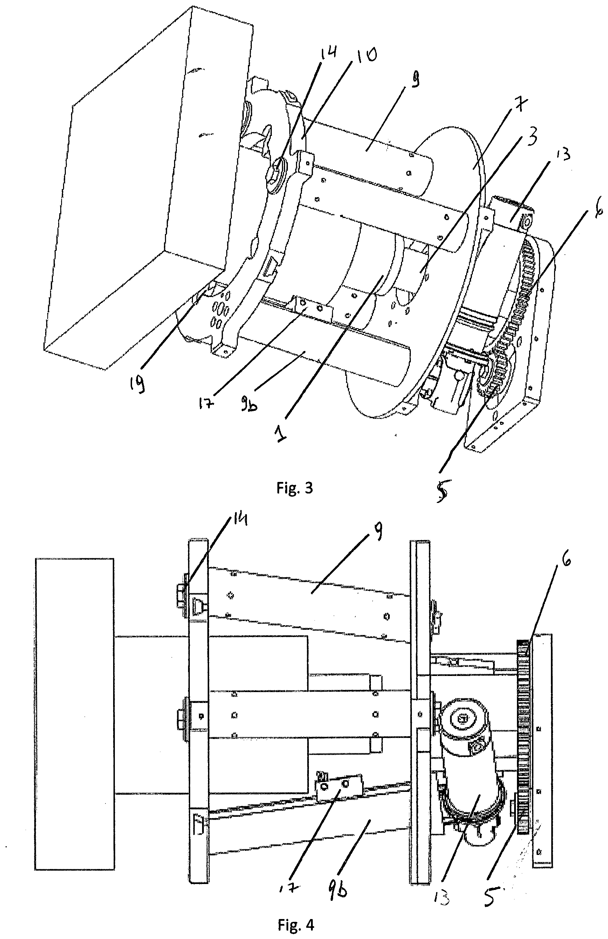

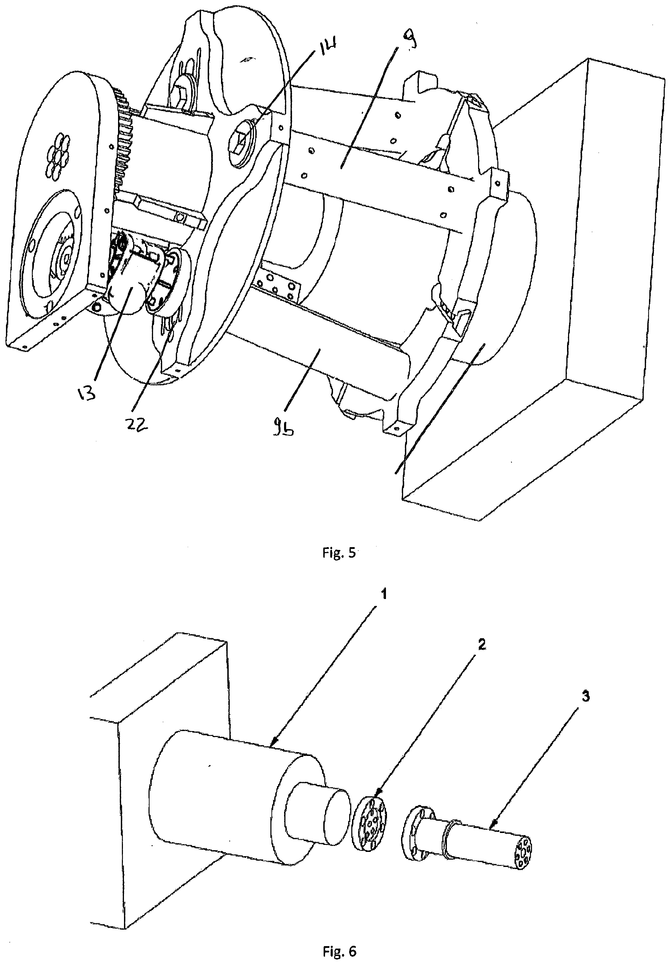

Other features and advantages of the present invention will be clear from the following description of an embodiment of the present invention given by way of non-limiting example in Figures 1, 2, 3, 4, 5 and 6.

### Brief description of the figures

Figure 1 shows a section of the composable machine tool which comprises the kit according to the present invention,
Figure 2 shows an axonometric view of the composable machine tool which comprises the kit according to the present invention for cylindrical machining,
Figure 3 shows another axonometric view of the composable machine tool which comprises the kit according to the present invention for cylindrical machining,
Figure 4 shows a side view of the composable machine tool which comprises the kit according to the present invention for conical machining,
Figure 5 shows an axonometric view of the composable machine tool which comprises the kit according to the present invention for conical machining,
Figure 6 shows an axonometric view of a detail of the use of the positioning plate of the composable machine tool which comprises the kit according to the present invention,

### Detailed description of a preferred embodiment

With reference to the figures, the composable machine tool object of the present invention comprises a kit for cylindrical and conical turning operations and for welding overlay. This kit consists of an element 3 which is fixed on the axis of the piece 1 to be machined. On the element 3 is fixed the machine that generates the rotation motion that can be equipped with a reduction unit composed of a pinion 5 and a gear wheel 6, a flange 7 is mounted on the element 3, the flange 7 is rotated by the gear wheel 6 and is mounted on a rotating hub (20) rotatable on bearings 8, the bearings 8 may advantageously but not exclusively, be rolling bearings composed of ball bearings 23 and roller bearings 8.

The flange 7 is connected, by means of at least three elongated connecting elements 9 of which an element is hollow 9b, to a ring 10, the elongated elements 9 and the hollow element 9b are fixed along a circumference of both the flange 7 and the ring 10 with locking means 14, 15, which advantageously but not exclusively may be screws 14, 15.

In the preferred embodiment, the elongated elements are four and are made of tubular elements which are fixed with threaded members 14 which have a bolt on the outside to facilitate screwing.

The hollow element 9b is provided with a worm screw 11 and a nut 12.

The rotation of the worm screw 11 is driven by a gear motor 13 fixed on the flange 7.

A tool head 17 mounted sliding on a guide 18 is attached on the nut 12, advantageously but not exclusively the tool head 17 is mounted sliding within which a key 16 integral with the nut 12 and the tool head 17 is inserted .

A gearmotor 13 is fixed on the flange 7, which determines the rotation of the worm screw 11. The worm screw 11 is screwed into the nut 12 which, being unable to rotate because the rotation is prevented by the key 16 inserted in the guide 18, is forced to advance in one direction or in the other according to the direction of rotation of the worm screw 11. In this way the tool head 17 is forced to advance, in one direction or in the other, since it is mounted on the nut 12.

The gearmotor 13 rotates together with the flange 7. To ensure the electrical connection of the gearmotor 13 a rotary electrical joint is provided between the element 3 which is fixed to the workpiece 1 and the rotating hub 20 which rotates together with the said gearmotor.

The ring 10 is provided with at least three stabilizing elements 19 which during contact with the workpiece 1 are in contact with the surface of the piece 1.

In the example shown in the figures, the stabilization elements 19 are four, but may also be a different number, however, equal to or greater than three and, advantageously but not exclusively. The stabilization elements 19 are inserted sliding in dovetail guides 21 within which they can be locked in the desired position by means of suitable fastening elements which in the example shown may be screws which are screwed into the stabilization elements 19.

To facilitate the positioning of the cylindrical turning kit, a positioning plate 2 is provided which shows the same holes present in the fixing flange of the element 3.

The positioning plate 2 serves to easily position on the work piece 1 the element 3 which supports the whole turning kit.

The composable machine tool comprising the kit object of the present invention also allows to perform conical machining.

In order to carry out the conical operations, the elongated elements 9 are locked on the flange 7 and/or on the ring 10 in slots 22 which allow the radial displacement of said elongated elements 9 so as to incline them with respect to the respective points in which the elongated elements 9 are locked on ring 10 and/or plate 7.

The kit object of the present invention allows to perform precision work on large diameters with cantilevering, both on external surfaces and on internal surfaces, obviously in the working of internal surfaces, the stabilization elements 19 will be positioned towards the outside and the element 3 is fixed on the work piece.

The Kit object of the present invention eliminates the vibrations which are present in the other solutions present on the market which fail to stabilize the arm on which the tool head is mounted, which being subjected to the stresses due to processing causes vibrations which affect the quality of the work being done.

The composable machine tool equipped with the kit for cylindrical and conical turning operations being essentially equipped with a system composed of the plate 7, of the ring 10, of the stabilizing elements 19 allows to have the feed guide, consisting of an elongated element 9, on one side fixed to the workpiece 1 through the element 3 and the flange 7 and on the opposite side resting on the piece 1 through the stabilization elements 19 which are on the ring 10, stabilization elements 19 which during the processing of the piece 1 touch the surface of the piece 1.

The composable machine tool provided with the kit object of the present invention is easy to position. By means of a positioning plate 2, the fixing holes of the composable machine provided with the kit object of the present invention are positioned and made on the work piece 1.

The composable machine tool provided with the kit object of the present invention is fixed on the work piece 1 by means of the element 3 which finds on the workpiece the fixing holes corresponding to those present on the element 3, made by means of the positioning plate 2.

The stabilization elements 19, present on the ring 7, are brought into contact with the surface of the workpiece 1 and then locked with the locking means constituted, in the example, by the screws 21. The tool is mounted on the head tool holder 17. At this point the composable machine tool equipped with the kit object of the present invention is ready to work.

The work carried out with the composable machine tool equipped with the kit for cylindrical or conical workings object of the present invention has two main advantages, an easy assembly and a machining in the absence of vibrations which allows to perform machining in less time and with great surface accuracy on external and internal diameters, small and large.

The invention is not limited by the embodiment described above. The machine tool can be modified or improved without going beyond the scope of the invention, as defined by the attached claims.

## Claims

1. Composable machine tool comprising a kit for cylindrical and conical turning machining operations comprising an element (3) which may be fixed on a workpiece (1), wherein a flange (7) is rotatably mounted on the element (3), wherein the flange (7) is connected, by means of at least three elongated elements (9) of which an element (9b) is hollow, to a ring (10), wherein the element (3) is fixed to a machine that generates the rotation motion of the flange (7) and of the ring (10) connected to said flange (7), **characterized in that** the hollow element (9b) is equipped with a worm screw (11) and a scroll nut (12), that the rotation of the worm screw is actuated by a gearmotor (13) fixed on the flange (7), that a tool head (17) slidable in a guide (18) is mounted on the scroll nut (12) and that the ring (10) is equipped with at least three stabilization elements (19) that can be in contact with the surface of the work piece (1) during machining of the workpiece (1).

2. Composable machine tool according to claim 1 **characterized in that** the stabilization elements (19) are inserted in sliding dovetail guides (20) within which they can be locked in the desired position by means of fixing elements (21).

3. Composable machine tool according to claim 2 **characterized in that** the fixing elements (21) of the stabilization elements (19) consist of screws which are screwed in the stabilization elements (19).

4. Composable machine tool according to claim 1 **characterized in** the elongated elements (9) are locked on the flange (7) and/or to the ring (10) in slots (22) in order to be able to perform conical machining.

5. Composable machine tool according to claim 1 **characterized in that** the flange (7) is put in rotation by a toothed wheel (6) and is mounted on a rotating hub (20) rotatable on bearings (8 , 23).

6. Composable machine tool according to claim 5 **characterized in that** the bearings are ball bearings (23) and/or roller bearings (8).

7. Composable machine tool according to claim 1 **characterized in that** the connection between the tool head (17) and scroll nut (12) is made by means of a key (16).

8. Composable machine tool according to claim 1 **characterized in that** the elongated elements (9) and the hollow element (9b) are fixed to the flange (7) and to the ring (10) by means of screws.

9. Composable machine tool according to claim 1 **characterized in that** an electrical rotary joint (23) is mounted between the element (3) and the rotating hub (20).

10. Composable machine tool according to claim 1 **characterized in that** for mounting a positioning plate (2) is used, said plate (2) containing the same holes present in a fixing flange of the element (3).

## Patentansprüche

1. Zusammensetzbare Werkzeugmaschine, die ein Kit für zylindrische und konische Drehbearbeitungsvorgänge umfasst, das ein Element (3) umfasst, das an einem Werkstück (1) befestigt werden kann, wobei ein Flansch (7) drehbar an dem Element (3) montiert ist, wobei der Flansch (7) mittels mindestens drei länglicher Elemente (9), von denen ein Element (9b) hohl ist, mit einem Ring (10) verbunden ist, wobei das Element (3) an einer Maschine befestigt ist, die eine Drehbewegung des Flansches (7) und des Rings (10), der mit dem Flansch (7) verbunden ist, erzeugt, **dadurch gekennzeichnet, dass** das hohle Element (9b) mit einer Schneckenschraube (11) und einer Scroll-Mutter (12) ausgerüstet ist, dass die Drehung der Schneckenschraube von einem Getriebemotor (13), der am Flansch (7) befestigt ist, angetrieben wird, dass ein Werkzeugkopf (17), der in einer Führung (18) gleitbar ist, an der Scroll-Mutter (12) montiert ist und dass der Ring (10) mit mindestens drei Stabilisierungselementen (19) ausgerüstet ist, die während der Bearbeitung des Werkstücks (1) mit der Fläche des Werkstücks (1) in Kontakt sein können.

2. Zusammensetzbare Werkzeugmaschine nach Anspruch 1, **dadurch gekennzeichnet, dass** die Stabilisierungselemente (19) in Schwalbenschwanzgleitführungen (20) eingesteckt sind, in denen sie in der gewünschten Position mithilfe von Befestigungselementen (21) verriegelt werden können.

3. Zusammensetzbare Werkzeugmaschine nach Anspruch 2, **dadurch gekennzeichnet, dass** die Befestigungselemente (21) der Stabilisierungselemente (19) aus Schrauben bestehen, die in die Stabilisierungselemente (19) geschraubt sind.

4. Zusammensetzbare Werkzeugmaschine nach Anspruch 1, **dadurch gekennzeichnet, dass** die länglichen Elemente (9) am Flansch (7) und/oder am Ring (10) in Schlitzen (22) verriegelt werden, damit eine konische Bearbeitung durchgeführt werden kann.

5. Zusammensetzbare Werkzeugmaschine nach Anspruch 1, **dadurch gekennzeichnet, dass** der Flansch (7) durch ein Zahnrad (6) in Drehung versetzt wird und an einer sich drehenden Nabe (20) montiert ist, die auf Lagern (8, 23) drehbar ist.

6. Zusammensetzbare Werkzeugmaschine nach Anspruch 5, **dadurch gekennzeichnet, dass** die Lager Kugellager (23) und/oder Wälzlager (8) sind.

7. Zusammensetzbare Werkzeugmaschine nach Anspruch 1, **dadurch gekennzeichnet, dass** die Verbindung zwischen dem Werkzeugkopf (17) und der Scroll-Mutter (12) mithilfe eines Keils (16) hergestellt wird.

8. **Zusammensetzbare Werkzeugmaschine nach Anspruch 1, dadurch gekennzeichnet, dass die länglichen Elemente (9) und das hohle Element (9b) mittels Schrauben an dem Flansch (7) und an dem Ring (10) befestigt sind.**

9. Zusammensetzbare Werkzeugmaschine nach Anspruch 1, **dadurch gekennzeichnet, dass** ein elektrisches Drehgelenk (23) zwischen dem Element (3) und der sich drehenden Nabe (20) montiert ist.

10. Zusammensetzbare Werkzeugmaschine nach Anspruch 1, **dadurch gekennzeichnet, dass** für die Montage eine Positionierungsplatte (2) verwendet wird, wobei die Platte (2) dieselben Löcher enthält, die in einem Befestigungsflansch des Elements (3) vorhanden sind.

## Revendications

1. Machine-outil composable comprenant un kit pour des opérations d'usinage de tournage cylindriques et coniques comprenant un élément (3) qui peut être fixé sur une pièce (1), où une bride (7) est montée rotative sur l'élément (3), où la bride (7) est reliée, au moyen d'au moins trois éléments allongés (9) dont un élément (9b) est creux, à une bague (10), où l'élément (3) est fixé à une machine qui génère le mouvement de rotation de la bride (7) et de la bague (10) reliée à ladite bride (7), **caractérisée en ce que** l'élément creux (9b) est équipé d'une vis sans fin (11) et d'un écrou en spirale (12), **en ce que** la rotation de la vis sans fin est actionnée par un motoréducteur (13) fixé sur la bride (7), **en ce qu'**une tête d'outil (17) coulissant dans un guide (18) est montée sur l'écrou en spirale (12) et **en ce que** la bague (10) est équipée d'au moins trois éléments de stabilisation (19) qui peuvent être en contact avec la surface de la pièce (1) pendant l'usinage de la pièce (1).

2. Machine-outil composable selon la revendication 1, **caractérisée en ce que** les éléments de stabilisation (19) sont insérés dans des guides coulissants en queue d'aronde (20) à l'intérieur desquels ils peuvent être bloqués dans la position souhaitée au moyen d'éléments de fixation (21).

3. Machine-outil composable selon la revendication 2, **caractérisée en ce que** les éléments de fixation (21) des éléments de stabilisation (19) sont composés de vis qui sont vissées dans les éléments de stabilisation (19).

4. Machine-outil composable selon la revendication 1, **caractérisée en ce que** les éléments allongés (9) sont bloqués sur la bride (7) et/ou sur la bague (10) dans des fentes (22) pour pouvoir effectuer un usinage conique.

5. Machine-outil composable selon la revendication 1, **caractérisée en ce que** la bride (7) est mise en rotation par une roue dentée (6) et est montée sur un moyeu rotatif (20) pouvant tourner sur des roulements (8, 23).

6. Machine-outil composable selon la revendication 5, **caractérisée en ce que** les roulements sont des roulements à billes (23) et/ou des roulements à rouleaux (8).

7. Machine-outil composable selon la revendication 1, **caractérisée en ce que** la liaison entre la tête d'outil (17) et l'écrou en spirale (12) est réalisée au moyen d'une clé (16).

8. Machine-outil composable selon la revendication 1, **caractérisée en ce que** les éléments allongés (9) et l'élément creux (9b) sont fixés à la bride (7) et à la bague (10) au moyen de vis.

9. Machine-outil composable selon la revendication 1, **caractérisée en ce qu'**un joint tournant électrique (23) est monté entre l'élément (3) et le moyeu rotatif (20).

10. Machine-outil composable selon la revendication 1, **caractérisée en ce que** pour le montage une plaque de positionnement (2) est utilisée, ladite plaque (2) contenant les mêmes trous présents dans une bride de fixation de l'élément (3).
